Europäisches Patentamt

European Patent Office

Office européen des brevets

(19)

(11) Veröffentlichungsnummer : **0 049 366**
**B1**

(12) # EUROPÄISCHE PATENTSCHRIFT

(45) Veröffentlichungstag der Patentschrift :
07.12.83

(51) Int. Cl.³ : **C 04 B 35/48**, F 27 D 1/16

(21) Anmeldenummer : **81106893.1**

(22) Anmeldetag : **03.09.81**

(54) **Hochfeuerfeste Trockenstampfmasse auf Basis Zirkonoxid zur Auskleidung von Induktionstiegelöfen.**

(30) Priorität : 02.10.80 DE 3037268

(43) Veröffentlichungstag der Anmeldung :
14.04.82 Patentblatt 82/15

(45) Bekanntmachung des Hinweises auf die Patenterteilung : 07.12.83 Patentblatt 83/49

(84) Benannte Vertragsstaaten :
AT BE CH DE FR GB IT LI LU NL SE

(56) Entgegenhaltungen :
US-A- 3 076 716
REFRACTORIES USSR, 1975, Seiten 239-243 New York, U.S.A. A.G. KARAULOV et al.: "Zirconia ramming compounds tested in induction furnaces"
CHEMICAL ABSTRACTS, Band 88, Nr. 22, 29. Mai 1978, Seite 309, Nr. 157354h Columbus, Ohio, U.S.A.
CHEMICAL ABSTRACTS, Band 77, Nr. 10, September 1972, Seite 263, Nr. 65808d Columbus, Ohio, U.S.A.
CHEMICAL ABSTRACTS, Band 82, Nr. 18, 5. Mai 1975, Seite 238, Nr. 115383n Columbus, Ohio, U.S.A.
REFRACTORIES USSR, 1981, Seiten 580-583 New York, U.S.A. A.G. KARAULOV et al.: "Use of tamped zirconium masses for lining vacuum induction furnaces for melting precision alloys"

(73) Patentinhaber : **DYNAMIT NOBEL AKTIENGESELL-SCHAFT**
**Patentabteilung Postfach 1209**
**D-5210 Troisdorf, Bez. Köln (DE)**

(72) Erfinder : **Kummer, Peter**
**Im Donnerschlag 29**
**D-5200 Siegburg (DE)**
Erfinder : **Rehfeld, Gerhard, Dr.**
**Bismarckstrasse 87**
**D-5100 Aachen (DE)**

**EP 0 049 366 B1**

**0 049 366**

Hochfeuerfeste Trockenstampfmasse auf Basis Zirkonoxid zur Auskleidung von Induktionstiegelöfen

Die Erfindung betrifft eine hochfeuerfeste Trockenstampfmasse, die, von Preßhilfsmittel abgesehen, aus $SiO_2$-armem, stabilisiertem Zirkonoxid unterschiedlicher Korngröße und aus $SiO_2$-armem, monoklinem, feinteiligem Zirkonoxid besteht, zur Auskleidung von Induktionstiegelöfen.

Unter den bei der Herstellung hochlegierter Edelstähle, Nickel-Basis-Legierungen, Chrom-Nickel-Basis-Legierungen und Sonderlegierungen sowohl in offenen Induktionstiegelöfen als auch in solchen Schmelzaggregaten, die unter Vakuum oder Schutzgas mit Schmelztemperaturen von 1 650 °C und darüber betrieben werden, herrschenden Bedingungen sind die feuerfesten Auskleidungsmaterialien höchsten Beanspruchungen durch das flüssige Metall ausgesetzt. Der legierte Stahlguß stellt durch seine Legierungselemente, wie Nickel, Chrom, Kobalt, Mangan, Silicium, Wolfram und Niob extreme chemische und physikalische Anforderungen an die feuerfeste Auskleidung.

Die chemische Beanspruchung des feuerfesten Materials beruht auf Reaktionen, welche die feuerfeste Auskleidung mit der Edelstahlschmelze selbst und mit den nichtmetallischen, oxidischen Schlackenbestandteilen, die aus dem Einsatzmaterial stammen, eingeht. Daneben wird die Auskleidung durch Temperaturwechsel beim Aufheizen, Chargieren und Entleeren des Ofens und den Temperaturgradienten zwischen der mit dem Schmelzgut in Kontakt stehenden Innenseite und der Außenseite sowie durch die starke Badbewegung der induktiv aufgeheizten erschmolzenen Charge physikalisch stark beansprucht. Diese Belastungen begünstigen das Eindringen der Schmelze in die Stampfmasse und können zum vorzeitigen Durchbruch eines Ofens führen.

Induktionstiegelöfen, die mit Abstichtemperaturen von 1 650 °C und darüber arbeiten, werden vorzugsweise mit basischen oder neutralen Stampfmassen zugestellt, daneben kommen Quarzit-, Quarz- oder Zirkonsilikatmassen als saure Zustellungsarten in Frage (vgl. Gießereipraxis Nr. 7, 1979, 111).

Die basischen Auskleidungen bestehen vorwiegend aus Sinter- oder Schmelzmagnesia, ggf. mit Zusätzen an $Al_2O_3$, $ZrO_2$, $ZrSiO_4$ und anderen Mineralisatoren, während bei den neutralen Massen Schmelz- oder Sinterkorund die Grundkomponente bildet, gegebenenfalls mit Zusätzen von MgO. Der MgO-Zusatz dient zur Verbesserung der Heißfestigkeit dieser Massen aufgrund der Spinell-bildung während des Schmelzbetriebes.

Zur Beschreibung der Wirkungsweise von Auskleidungen von Induktionsöfen mit Stampfmassen wird ein Dreizonenmodell herangezogen. Die innerste mit der Schmelze in Kontakt stehende Zone der zylindermantelförmigen Auskleidung ist dicht gesintert und dem unmittelbaren und erosiven Angriff der Schmelze sowie der Schlacken ausgesetzt.

Die dahinter befindliche mittlere Zone hat einerseits die Funktion, durch Risse der inneren versinterten Zone vorgedrungenes flüssiges Schmelzgut sicher aufzuhalten und andererseits durch Volumenvergrößerung aufgrund temperaturabhängiger Änderungen der Kristallmodifikationen oder durch topochemische Reaktionen radiale Druckkräfte auf die innere Sinterzone auszuüben, die insbesondere geeignet sind, Risse der Sinterzone zu verkleinern bzw. zu schließen.

Die dritte äußere Zone aus unveränderter Stampfmasse dient im wesentlichen als Reservezone und übernimmt bei fortschreitendem Abtrag der Sinterzone die Funktion der mittleren Zone. Aus der Funktion der Zonen folgt, daß es nicht zu einer vorzeitigen Versinterung der mittleren Zone kommen darf und daß dem Korngrößenaufbau der Stampfmassen eine große Bedeutung zukommt.

In Ogneupory Nr. 4, 39 bis 42, April 1974, wird das Verhalten von Stampfmassen aus 80 % teilstabilisiertem Zirkonoxid und 20 % monoklinem Zirkonoxid als durch Feinmahlung aktiviertem Binder in Induktionsöfen bezüglich der mechanischen Festigkeit und der Widerstandsfähigkeit gegen das Abplatzen von Teilen der inneren Sinterzone beim Erwärmen von Molybdänprobestücken untersucht.

Eine feuerfeste Trockenstampfmasse aus einer basischen Grundsubstanz mit einem Gehalt von mindestens 96 Gew.-% MgO und/oder CaO ist in der DE-B 25 52 150 beschrieben.

In der EP-A 0 005 482 ist eine feuerfeste Trockenstampfmasse zum Auskleiden von Induktionstiegelöfen auf Grundlage eines $Al_2O_3$-Materials mit spinellbildenden Zusätzen und speziellen Korngrößenverteilungen beschrieben.

In Ogneupory Nr. 3, 54 bis 57, März 1979, wird über Untersuchungen der Beständigkeit aus Feuerfestmaterialien auf Basis von stabilisiertem $ZrO_2$ hergestellten Probebechern gegenüber dem Angriff saurer und basischer Schlackenbestandteile berichtet.

In Chemical Abstracts Band 88, Nr. 22, 29. Mai 1978, Seite 309, Nr. 157354 h, ist die Herstellung von Gießnasen für metallurgische Zwecke aus einer Mischung aus teilstabilisiertem $ZrO_2$ und monoklinem $ZrO_2$ bestimmter Kornfraktionen durch Kompaktieren und Sintern beschrieben.

In Chemical Abstracts Band 77, Nr 10, September 1972, Seite 263, Nr. 65808 d, sind keramische Massen aus teilstabilisiertem $ZrO_2$, die nach Ausformen, Trocknen und Brennen einen bestimmten Gehalt an monoklinem $ZrO_2$ aufweisen und deren Einsatz als Auskleidungen von Öfen zum Schmelzen von Metall beschrieben.

Der Erfindung liegt nun die Aufgabe zugrunde, eine neue hochfeuerfeste Trockenstampfmasse für das Erschmelzen hochlegierter Edelstähle, Nickel-Basis-Legierungen, Chrom-Nickel-Basis-Legierungen und Sonderlegierungen in Induktionstiegelöfen bereitzustellen, die eine verbesserte Beständigkeit gegen Temperaturwechsel und gegen das Auftreten von Kühlrissen, eine verbesserte Heißfestigkeit gegenüber

2

**0 049 366**

der Metallschmelze bei Schmelztemperaturen von 1 650 °C und darüber sowie eine erhöhte Widerstandsfähigkeit der Auskleidung gegen vorzeitige Durchsinterung aufweist.

Diese Aufgabe wird erfindungsgemäß entsprechend den im Kennzeichen des Anspruches 1 angegebenen Merkmalen gelöst.

Bevorzugt ist dabei eine Masse, bei der von einem mit 3,7 bis 5 Gew.-% CaO- und/oder MgOstabilisierten Zirkonoxid ausgegangen wird.

Das für die erfindungsgemäße Masse verwendete stabilisierte Zirkonoxid wird im Lichtbogenofen geschmolzen und dabei die kubische Phase des Zirkonoxides mittels CaO oder mit anderen Zusätzen in bekannter Weise stabilisiert. Das Ausgangsmaterial weist einen Gehalt von mindestens 94 Gew.-% $ZrO_2$ einschließlich eines geringen Anteils des als natürlicher Begleiter vorkommenden $HfO_2$ auf. Nach dem Erschmelzen erfolgt die Zerkleinerung des Materials in bekannter Weise auf 0 bis 4 mm.

Das in der erfindungsgemäßen Masse verwendete monokline Zirkonoxid wird ebenfalls im Lichtbogenofen erschmolzen und anschließend auf eine Korngröße von etwa 0 bis 0,1 mm zerkleinert. Dieses feine und hochreine Material wird ausschließlich als Bindematerial im Kornbereich von etwa 0 bis 0,06 mm mit einem $SiO_2$-Gehalt von vorzugsweise 0,2 Gew.-% oder darunter in der vorstehend genannten Masse verwendet. Der Vorteil dieses geschmolzenen, hochreinen, monoklinen Zirkonoxides gegenüber den üblicherweise durch Sintern hergestellten Materialien oder auch gegenüber feingemahlenen Naturprodukten liegt in der sehr geringen Porosität der Einzelkörner und der relativ niedrigen Sinteraktivität.

Erst dadurch ergibt sich beim Einsatz der Masse im Induktionsofen die gewünschte langsame, gut steuerbare Durchsinterung. Außerdem wird durch die geringe Porosität des feinen, monoklinen Zirkonoxidanteils die Penetration durch die Stahlschmelze gehemmt.

Die Auswahl der speziellen Kornfraktionen ist ausschlaggebend für den Aufbau einer sinterfähigen, nicht mit der Schmelze reagierenden Masse.

Von besonderer Bedeutung ist das Vorhandensein eines hohen chemischen Reinheitsgrades im Feinanteil der Masse, um ein vorzeitiges Versintern — speziell bei mit Aluminium desoxidierten Edelstählen — zu verhindern. Bei vollstabilisierten Zirkonoxidmassen und auch Zirkonoxidmassen mit einem Anteil an monoklinem Zirkonoxid, das höhere Fremdverunreinigungen aufweist, bilden sich während des Schmelzprozesses niedrig schmelzende Calciumaluminate und Calciumsilikate, die eine vorzeitige Versinterung der Masse herbeiführen und somit die Haltbarkeit des Tiegels herabsetzen. Durch Verwendung eines durch Zersetzung von Zirkonsilikat im Lichtbogenofen geschmolzenen monoklinen Zirkonoxides, welches nach Abkühlen und Zerkleinern unter Zusatz von gesättigten oder ungesättigten höher molekularen Fettsäuren (vgl. DE-C 11 18 178) im Flotationsprozeß gewonnen wurde, konnte nach anschließender Reinigung in Flußsäure ein kieselsäurearmes monoklines Zirkonoxid als Versatzkomponente eingesetzt werden. Dieses hochreine monokline Zirkonoxid bringt, bedingt durch sein dichtes Korn, in der Masse eine ausgezeichnete Verschlackungsbeständigkeit während des Schmelzprozesses. Dieser Vorteil ist erfindungsgemäß dadurch gegeben, daß als Versatzkomponente das hochreine, geschmolzene Zirkonoxid im Kornbereich von 0 bis 0,06 mm mit einem Kieselsäuregehalt kleiner als 0,2 % eingesetzt wird.

Im allgemeinen liegt der Zusatz an monoklinem Zirkonoxid in der Masse im Bereich von 5 bis 40 Gew.-%, vorzugsweise bei 10 bis 20 Gew.-%. Der Zusatz an geschmolzenem monoklinen Zirkonoxid verbessert das thermische Ausdehnungsverhalten und die Temperaturwechselbeständigkeit der aus diesen Massen erstellten Auskleidungen.

Der hohe Schmelzpunkt des monoklinen Zirkonoxids von etwa 2 700 °C und die Widerstandsfähigkeit der Grundkomponente bis zu etwa 2 500 °C in oxidierender und bis etwa 2 200 °C in reduzierender Atmosphäre verhindern das Auftreten flüssiger Schmelzphasen in der Sinterzone bei Einwirkung von Metallschmelzen und Schlacken. Dadurch wird auch die unerwünschte rasche Durchsinterung der Auskleidung vermieden. Von besonderer Bedeutung für den erfolgreichen Einsatz der Masse ist die Einhaltung der chemischen Reinheit der eingesetzten Komponenten.

Beispiel 1

Eine typische Charge für den Aufbau einer Auskleidung eines Induktionstiegelofens mit der erfindungsgemäßen Masse bestand aus 87 Gew.-% geschmolzenem, vollstabilisiertem Zirkonoxid mit ca. 0,3 Gew.-% $SiO_2$ im Kornbereich von 0 bis 4 mm mit der in der folgenden Tabelle 1 angegebenen chemischen Zusammensetzung, sowie aus einem Zusatz von 13 Gew.-% an geschmolzenem monoklinen Zirkonoxid mit nur 0,1 Gew.-% $SiO_2$ der Kornfraktion 0 bis 0,06 mm.

Tabelle 1

| | | |
|---|---|---|
| $SiO_2$ | 0,3 | % |
| $TiO_2$ | 0,1 | % |
| $Fe_2O_3$ | 0,08 | % |
| CaO | 4,2 | % |
| MgO | 0,1 | % |

3

**0 049 366**

Tabelle 1 (Fortsetzung)

| | | |
|---|---|---|
| $Al_2O_3$ | | 0,08 % |
| $Na_2O$ | < | 0,005 % |
| $K_2O$ | < | 0,005 % |
| $ZrO_2$ | + | 95,1 % |
| $HfO_2$ | | |

Durch Absieben wurden die folgenden Kornfraktionen erhalten und vereinigt

Tabelle 2

| | | |
|---|---|---|
| 0 bis 0,07 mm | 22 Gew.-% | |
| 0,07 bis 0,12 mm | 9 Gew.-% | |
| 0,12 bis 0,25 mm | 11 Gew.-% | |
| 0,25 bis 0,5 mm | 12 Gew.-% | |
| 0,5 bis 1,0 mm | 10 Gew.-% | |
| 1 bis 2 mm | 13 Gew.-% | |
| 2 bis 4 mm | 23 Gew.-% | |

Die aus stabilisiertem und monoklinen Zirkonoxid bestehende Kornfraktion 0 bis 0,07 mm aus der in Tabelle 2 angegebenen Mischung weist folgende Spurenverunreinigungen auf

Tabelle 3

| | |
|---|---|
| $SiO_2$ | 0,40 % |
| $TiO_2$ | 0,11 % |
| $Fe_2O_3$ | 0,09 % |
| CaO | 2,26 % |
| $Al_2O_3$ | 0,06 % |

Die Stampfdichte der Masse wurde mit 4,46 g/cm³ bestimmt. Nur mit der vorstehend genannten Kornzusammensetzung war eine Masse mit einer Stampfdichte von mindestens 4,40 g/cm³ zu erhalten. Diese Dichte ist eine weitere Voraussetzung, um eine Penetration der Masse durch Stahl- oder Schlackenkomponenten zu vermeiden.

Zur Ermittlung des Sinterverhaltens wurden von der beschriebenen Masse mit einem Rammgerät nach Georg Fischer AG, Schaffhausen, Normprüfkörper mit 50 mm Durchmesser und 50 mm Höhe hergestellt. Das Verdichten erfolgte durch 25 Rammschläge beidseitig auf die Prüfkörperoberfläche. Als Preßhilfsmittel zur homogenen Verdichtung wurden der trockenen Masse 2 Gew.-% Zusoplast 91/11* zugesetzt. Nach dem Trocknen bei 110 °C wurden die Prüfkörper bei unterschiedlichen Brenntemperaturen mit gleicher Haltezeit im gasbeheizten Wistra-Ofen in oxidierender Atmosphäre gebrannt. Es wurden die folgenden in Tabelle 4 wiedergegebenen Ergebnisse erhalten :

Tabelle 4

| Brenn-temperatur | Halte-zeit | Rohdichte DIN 51065 | Wasserauf-nahme DIN 51056 | offene Porosität | Kaltdruckfestig-keit DIN 51067 |
|---|---|---|---|---|---|
| °C | h | g/cm³ | Gew.-% | Vol.-% | N/mm² |
| 1 600 | 1 | 4,30 | 5,7 | 24,5 | 24,4 |
| 1 650 | 1 | 4,50 | 4,7 | 21,2 | 58,9 |
| 1 700 | 1 | 4,51 | 4,7 | 21,2 | 67,4 |
| 1 750 | 1 | 4,54 | 4,6 | 21,0 | 74,5 |

Beispiel 2

Eine weitere Verbesserung der Tiegelhaltbarkeit konnte mit einer Masse aus 82 Gew.-% eines geschmolzenen vollstabilisierten Zirkonoxids im Kornbereich 0-4 mm mit der folgenden in Tabelle 5 angegebenen chemischen Zusammensetzung sowie mit einem Zusatz von 18 Gew.-% an hochreinem geschmolzenen monoklinen Zirkonoxid der Kornfraktion 0-0,06 mm erreicht werden.

(Siehe Tabelle 5, Seite 5 f.)

4

Tabelle 5

| | |
|---|---|
| $SiO_2$ | 0,20 % |
| $TiO_2$ | 0,10 % |
| $Fe_2O_3$ | 0,08 % |
| CaO | 4,0 % |
| MgO | 0,1 % |
| $Al_2O_3$ | 0,07 % |
| $Na_2O$ | 0,005 % |
| $K_2O$ | 0,005 % |
| $ZrO_2 + HfO_2$ | 95,4 % |

Durch Erhöhnung des monoklinen Zirkonoxidanteiles in der Masse konnte gegenüber Beispiel 1 eine wesentliche Verringerung des Fremdoxidanteils in der Fraktion 0-0,07 mm erreicht werden. In der aus stabilisiertem, monoklinem Zirkonoxid bestehenden Fraktion 0-0,07 mm wurden die in der nachstehenden Tabelle 6 angegebenen Spurenverunreinigungen ermittelt :

Tabelle 6

| | |
|---|---|
| $SiO_2$ | 0,15 % |
| $TiO_2$ | 0,05 % |
| CaO | 1,20 % |
| $Fe_2O_3$ | 0,085 % |
| $Al_2O_3$ | 0,06 % |

Der Kornaufbau der vorstehend beschriebenen Masse wurde durch Absieben in Kornfraktionen erhalten

Tabelle 7

| | |
|---|---|
| 0 -0,07 mm | 24 Gew.-% |
| 0,07-0,12 mm | 6,5 Gew.-% |
| 0,12-0,25 mm | 10,5 Gew.-% |
| 0,25-0,5 mm | 10 Gew.-% |
| 0,5 -1,0 mm | 12,0 Gew.-% |
| 1 -2 mm | 14,5 Gew.-% |
| 2 -4 mm | 22,5 Gew.-% |

Die Stampfdichte der Masse wurde mit 4,4 g/cm³ bestimmt. Zur Ermittlung des Sinterverhaltens wurden die gleichen Untersuchungen, wie im Beispiel 1 angegeben, ausgeführt und die folgenden in Tabelle 8 angegebenen Ergebnisse erhalten :

Tabelle 8

| | | | | |
|---|---|---|---|---|
| Brenn-temperatur °C | 1 600 | 1 650 | 1 700 | 1 750 |
| Haltezeit h | 1 | 1 | 1 | 1 |
| Rohdichte DIN 51065 g/cm³ | 4,30 | 4,56 | 4,55 | 4,56 |
| Wasseraufnahme DIN 51056 Gew.-% | 5,7 | 4,4 | 4,6 | 4,5 |
| offene Porosität Vol.-% | 24,5 | 20,1 | 20,9 | 20,5 |
| Kaltdruckfestigkeit DIN 51067 N/mm² | 23,5 | 51,3 | 52,3 | 67,1 |

# 0 049 366

Das Einbringen der Masse zwischen Ofenwand und Metallschablone erfolgte in beiden Beispielen in der üblichen Weise von Hand durch lagenweises Stampfen, wobei darauf geachtet wurde, daß keine Entmischungen hinsichtlich der Kornverteilung auftraten.

Beim Schmelzen eines hochchromhaltigen Edelstahlgusses in der Versuchsreihe von 120 Chargen mit einer Zustellung gemäß Beispiel 1 wurde die achtfache Haltbarkeit gegenüber einer spinellbildenden hochtonerdehaltigen Zustellung (10 bis 15 % MgO, Rest $Al_2O_3$) erreicht.

Die Auskleidung zeichnete sich während der gesamten Schmelzversuche durch eine glatte, nicht infiltrierte Wandung aus. Durch die erhebliche Verringerung des Anteils an Gußstücken, die nichtmetallische Einschlüsse aufwiesen, waren eine Steigerung der Edelstahlgußqualität und ein stark reduzierter Aufwand für die Nachbearbeitung der Gußstücke festzustellen.

Wie aus den Tabellen 4 und 8 der Beispiele 1 und 2 entnommen werden kann, wird zum Erreichen einer ausreichenden Anfangsfestigkeit gegen die Erosion des Metallbades und gegen den Schlackenangriff für die Masse eine Sintertemperatur von mindestens 1 650 °C benötigt. Von besonderer Bedeutung ist deshalb der Kornaufbau der Masse durch Auswahl der Kornfraktionen, um eine hohe Packungsdichte und nach dem Einsintern des Tiegels eine ausreichende Festigkeit garantieren zu können.

Beim Arbeiten mit dem beschriebenen Tiegelfutter konnte beim Schmelzen von hochlegierten Edelstählen, Legierungen und Reinmetallen festgestellt werden, daß die reine Zirkonoxid-Auskleidung sich reaktionsneutral verhält und die Schlacken- und Metallinfiltration gegenüber hochtonerdehaltigen Massen mit Spinellbildung (10-15 Gew.-% MgO-Zusatz) wesentlich geringer ist. Durch Verwendung dieser Auskleidung auf Zirkonoxidbasis wurd es erstmals möglich, daß ein 50 mm starkes Ofenfutter bis auf eine Restwandstärke von 10 mm gefahren werden kann. Im offenen Induktionsofen konnte durch das Fahren bis auf die Tiegelwandstärke von 10 mm ein wesentlich schnelleres Aufheizen der Schmelze und durch den größeren Schmelzinhalt eine erhebliche Energieeinsparung realisiert werden.

Ein besonderes Problem stellt die Einwirkung von Desoxidationsmitteln (z. B. Al, Si) in der Stahlschmelze auf das Tiegelfutter dar, weil die entstehende Schlacke einen chemisch aggressiven Ansatz an der Tiegelinnenwand bildet. Bei Verwendung von spinellbildenden, tonerdereichen Stampfmassen ist die Ansatzbildung durch $Al_2O_3$ oder $SiO_2$ infolge der geringeren Feuerfestigkeit des Tiegels sehr intensiv, ferner tritt durch Ausbildung niedrigschmelzender Verbindungen ein vorzeitiger Verschleiß ein.

Beim Abschmelzen des Ansatzes mit Calciumsilizium wird ein hochtonerdehaltiger Tiegel stark angegriffen, weil diese Massen stärker durchsintern. Nachteilig bei diesen Massen ist auch, daß beim Entfernen des Ansatzes keine glatte Tiegelwand erreicht werden kann. Dagegen lassen sich die erfindungsgemäßen Massen sauber und glatt beim Entfernen des Ansatzes abschmelzen, so daß eine Verkürzung der Schmelzzeiten um 20 bis 30 % eintritt.

Ein weiterer Vorteil der erfindungsgemäßen Masse ist dadurch gegeben, daß trotz des Fahrens bis zur geringstmöglichen Wandstärke das Ende der Brauchbarkeit des Tiegels durch Schwankungen in der Stromaufnahme angezeigt wird. Durch diesen Effekt sind bei den erfindungsgemäßen Zustellungen keine Tiegeldurchbrüche bisher bekannt geworden, die zum vorzeitigen Ausfall des Tiegels geführt hätten wie es bei anderen Tiegelauskleidungen öfters der Fall ist.

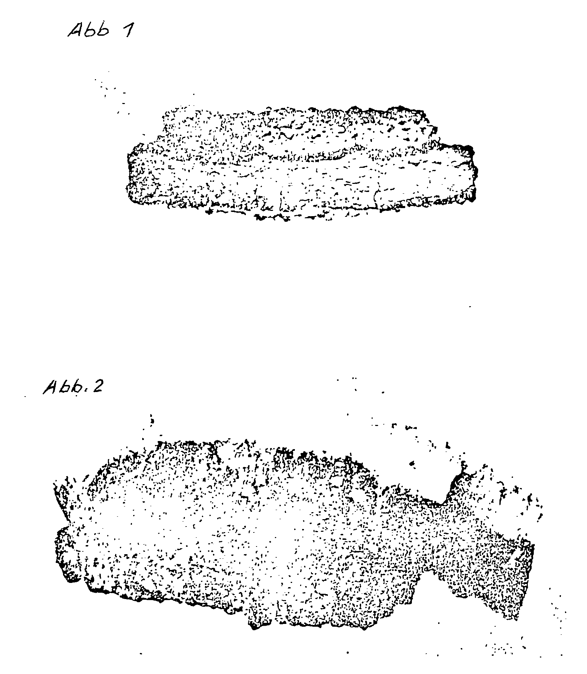

Abbildung 1 zeigt auf einem Foto ein Stück einer Tiegelwandung aus einer Trockenstampfmasse aus geschmolzenem vollstabilisiertem Zirkonoxid mit 18 Gew.-% geschmolzenem monoklinem Zirkonoxid im Querschnitt nach 120 Chargen (vgl. Beispiel 1).

Zu erkennen sind die drei Zonen, Tiegelinnenwand mit geringer Infiltration, Sinterzone sowie als dritte Zone eine nicht versinterte lose Körnung.

Abbildung 2 zeigt auf einem Foto ein Stück einer Tiegelwandung aus einer hochtonerdehaltigen Trockenstampfmasse mit Spinellbildung (15 % MgO-Zusatz) im Querschnitt nach 15 Chargen (vgl. Beispiel 1).

Zu erkennen sind die drei Zonen, Tiegelinnenwand mit starkem Schlackenansatz, stark infiltrierte Zwischenschicht und die bis zum Tiegelrand durchgesinterte dritte Zone.

## Ansprüche

1. Hochfeuerfeste Trockenstampfmasse, die, von Preßhilfsmittel abgesehen, aus $SiO_2$-armem, stabilisiertem Zirkonoxid unterschiedlicher Korngröße und aus $SiO_2$-armem, monoklinem, feinteiligem Zirkonoxid besteht, zur Auskleidung von Induktionstiegelöfen, dadurch gekennzeichnet, daß die Masse, von Preßhilfsmittel abgesehen, aus mit CaO, MgO, $Y_2O_3$, Seltenen Erden oder ihren Mischoxiden in bekannter Weise stabilisiertem Zirkonoxid einer Korngröße im Bereich von 0 bis 4 mm und aus 5 bis 40 Gew.-% monoklinem, geschmolzenem Zirkonoxid mit weniger als 0,5 Gew.-% $SiO_2$ und einer Korngröße im Bereich von 0 bis 0,06 mm besteht, wobei die Masse eine Stampfdichte von mindestens 4,4 g/cm$^3$ aufweist und sich aus folgenden Kornfraktionen zusammensetzt :

| | |
|---|---|
| 0 bis 0,07 mm | 15 bis 30 Gew.-% |
| 0,07 bis 0,12 mm | 5 bis 15 Gew.-% |
| 0,12 bis 0,25 mm | 5 bis 15 Gew.-% |

| | | |
|---|---|---|
| 0,25 bis 0,5 | mm | 5 bis 15 Gew.-% |
| 0,5 bis 1,0 | mm | 5 bis 15 Gew.-% |
| 1,0 bis 2,0 | mm | 5 bis 15 Gew.-% |
| 2,0 bis 4,0 | mm | 15 bis 30 Gew.-%. |

2. Masse nach Anspruch 1, dadurch gekennzeichnet, daß von einem vollstabilisierten Zirkonoxid ausgegangen wird, das 3,7 bis 5 Gew.-% CaO und/oder MgO enthält.

3. Masse nach Anspruch 2, dadurch gekennzeichnet, daß ein monoklines, geschmolzenes Zirkonoxid mit einem $SiO_2$-Gehalt von 0,2 Gew.-% oder darunter eingesetzt wird.

## Claims

1. Highly refractory dry tamping mass which consists, apart from tamping adjuvants, of stabilised zirconium oxide of varying particle size low in $SiO_2$, and of monoclinic, finely divided zirconium oxide low in $SiO_2$, for lining coreless induction furnaces, characterised in that the mass consists, apart from tamping adjuvants, of zirconium oxide with a particle size ranging from 0 to 4 mm, stabilised in known manner with CaO, MgO, $Y_2O_3$, rare earths or the mixed oxides thereof, and of 5 to 40 % by weight of monoclinic molten zirconium oxide with less than 0.5 % by weight of $SiO_2$ and with a particle size in the range from 0 to 0.06 mm, the mass having a tamped density of at least 4.4 $g/cm^3$ and being made up of the following particle fractions :

| | | |
|---|---|---|
| 0 to 0.07 mm | 15 to 30 % by weight |
| 0.07 to 0.12 mm | 5 to 15 % by weight |
| 0.12 to 0.25 mm | 5 to 15 % by weight |
| 0.25 to 0.5 mm | 5 to 15 % by weight |
| 0.5 to 1.0 mm | 5 to 15 % by weight |
| 1.0 to 2.0 mm | 5 to 15 % by weight |
| 2.0 to 4.0 mm | 15 to 30 % by weight. |

2. Mass as claimed in claim 1, characterised in that a fully stabilised zirconium oxide containing 3.7 to 5 % by weight of CaO and/or MgO is used as starting material.

3. Mass as claimed in claim 2, characterised in that a monoclinic molten zirconium oxide with an $SiO_2$ content of 0.2 % by weight or less is used.

## Revendications

1. Pisé réfractaire damé à sec, qui, en dehors d'auxiliaires de pressages, comprend de l'oxyde de zirconium stabilisé, à faible teneur en $SiO_2$, de granulométrie variable, et de l'oxyde de zirconium finement divisé, monoclinique, à faible teneur en $SiO_2$, pour le revêtement de fours à creusets à induction, caractérisé en ce que le pisé, outre les auxiliaires de pressage, se compose d'oxyde de zirconium stabilisé d'une manière connue par CaO, MgO, $Y_2O_3$, des terres rares ou leurs oxydes mixtes, avec une granulométrie comprise entre 0 et 4 mm, et de 5 à 40 % en poids d'oxyde de zirconium monoclinique fondu ayant une teneur en $SiO_2$ inférieures à 0,5 % en poids et une granulométrie comprise entre 0 et 0,06 mm, le pisé présentant une masse volumique après damage d'au moins 4,4 $g/cm^3$ et se composant des fractions granulométriques suivantes :

| | | |
|---|---|---|
| 0 à 0,07 mm | 15 à 30 %-poids |
| 0,07 à 0,12 mm | 5 à 15 %-poids |
| 0,12 à 0,25 mm | 5 à 15 %-poids |
| 0,25 à 0,5 mm | 5 à 15 %-poids |
| 0,5 à 1,0 mm | 5 à 15 %-poids |
| 1,0 à 2,0 mm | 5 à 15 %-poids |
| 2,0 à 4,0 mm | 15 à 30 %-poids |

2. Pisé selon la revendication 1, caractérisé en ce qu'on part d'un oxyde de zirconium totalement stabilisé, qui contient 3,7 à 5 % en poids de CaO et/ou de MgO.

3. Pisé selon la revendication 2, caractérisé en ce qu'on utilise un oxyde de zirconium monoclinique fondu ayant une teneur en $SiO_2$ de 0,2 % en-poids ou moins.

Abb 1

Abb. 2